# EUROPEAN PATENT APPLICATION

(11) **EP 4 825 988 A1**
(43) Date of publication of application: **21.10.2026**
(21) Application number: 26164858.8
(22) Date of filing: 16.03.2026
(51) Int. Cl.: C14B 7/02, B32B 9/02

(54) **METHOD AND APPARATUS FOR NORMALIZING THE FINISHING OF NATURAL HIDES**

(30) Priority: 18.04.2025 IT 202500008808
(71) Applicant: Bergi S.p.A., 36071 Arzignano (VI) (IT)
(72) Inventor: BERGOZZA, Mauro, 36071 ARZIGNANO VI (IT)
(74) Representative: Modiano, Micaela Nadia

(57) **Abstract**

A method for normalizing the finishing of natural hides, which provides for supplying at least one at least partially finished hide (100) with at least one finishing layer (101) made of polymeric material applied to at least one face thereof, subjecting the finishing layer (101) to heating to bring it to a temperature substantially comprised between the glass transition temperature and the melting point of the polymeric material, subjecting the finishing layer (101) to an action of reorganization of its polymeric chains in order to orient them along at least one preferred direction, and subjecting the finishing layer (101) to cooling.

## Description

The present invention relates to a method and an apparatus for normalizing the finishing of natural hides.

Various methods and apparatuses for finishing and enhancing a hide are known in the leather industry which use, during the finishing process, more or less viscous chemical products, such as varnishes, resin compounds, fillers, and so on, which are deposited on the upper surface of the hide to be treated in order to improve its appearance and mechanical properties.

Currently, one particularly widespread type of apparatus adapted for hide enhancing is the so-called "spray" or "spray booth" type.

This type of apparatus provides for a line along which one or more spray booths are arranged, each followed by a drying or thermal polymerization tunnel.

The number of booths along the line depends on the finishing process chosen for the items to be processed.

The spray booths are provided with spray guns with rotary, reciprocating, or elliptical movement and have the function of spraying and depositing the varnish or liquid compound on the upper surface of the hide.

The hide thus coated with varnish is immediately dried in the subsequent tunnel at the desired temperature (normally between 80° and 100°C).

With spray finishing apparatuses, as many polymeric layers are formed on top of the upper surface of the hide as there are so-called "passes" of the hide under the spray booths.

The hide thus coated will be ready for the subsequent final steps of printing or other processes.

Another known method for enhancing hides is the one that provides for finishing the hide by means of so-called "release papers".

This method in fact uses a paper known as "release paper" since it has a side coated with non-stick material.

Finishing with this method is termed "multi-layer", since it involves applying one or more polymeric layers to one side of the hide by means of compound deposition devices.

In the "release paper" finishing method as well, the polymeric layers are polymerized independently of each other.

In particular, the first, most valuable layer is spread or sprayed directly onto the release paper, while the others are spread or sprayed one on top of the other, above the first layer, so as to obtain a so-called "polymeric multilayer" on the release paper.

The hide is then applied onto the polymeric multilayer by means of the interposition of an adhesive layer that can be spread beforehand onto the polymeric multilayer or directly onto one side of the hide.

Once the release paper has been uncoupled from the sandwich provided, one obtains the hide with the polymeric multilayer applied, provided externally with the imprint of the paper.

The above cited solutions are not entirely satisfactory.

In fact, the deposition of the pigments, compounds, and adhesives, which are applied separately, forms on the upper face of the hide a nonhomogeneous multilayer which is not free from internal tensions, which significantly contribute to making the product scarcely elastic and natural.

To reduce these negative effects present in the polymeric layers, mechanical operations of staking, milling, and stretching are often introduced in the production process, aimed at "releasing" the internal tensions created during these finishing processes.

However, the results remain limited and the mechanical actions themselves must be applied cautiously so as not to further compromise the quality of the material, the adhesion between the polymeric layers, and the polymeric layers themselves.

The aim of the present invention is to provide a method and an apparatus for normalizing the finishing of natural hides that is capable of improving the background art in one or more of the above aspects.

Within this aim, an object of the invention is to provide a method and an apparatus for normalizing the finishing of natural hides that gives the finished hides a superior appearance and characteristics of quality and naturalness compared to the background art.

Another object of the invention is to provide an apparatus for normalizing hides the structure of which is relatively simple to provide.

A further object of the invention is to provide an apparatus for normalizing the finishing of natural hides that can offer the greatest assurances of reliability and safety in its operation.

A still further object of the present invention is to overcome the drawbacks of the background art in a manner that is alternative to any existing solutions.

Not least object of the invention is to provide an apparatus for normalizing the finishing of natural hides which, due to its particular constructive characteristics, can also be competitive from a purely economic point of view.

This aim, as well as other objects that will become more apparent hereinafter, are achieved by a method for normalizing the finishing of natural hides according to claim 1, optionally provided with one or more of the characteristics of the dependent claims.

According to another aspect of the invention, an apparatus for normalizing the finishing of natural hides according to claim 6 is provided.

Further characteristics and advantages of the invention will become more apparent from the description of a preferred but not exclusive embodiment of the method and apparatus according to the invention, illustrated by way of non-limiting example in the accompanying drawings, wherein:

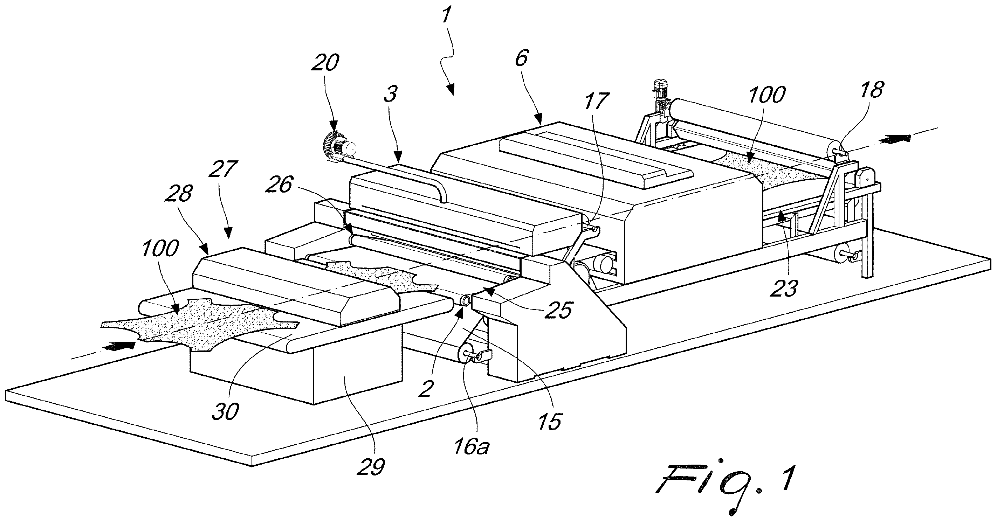

Figure 1 is a schematic perspective view of the apparatus according to the invention;

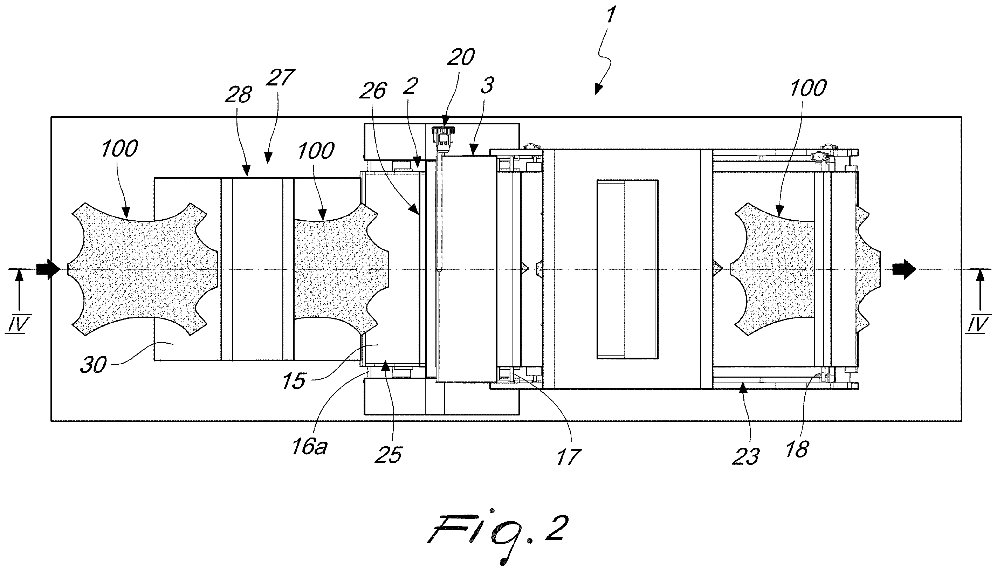

Figure 2 is a top plan view of the apparatus of Figure 1;

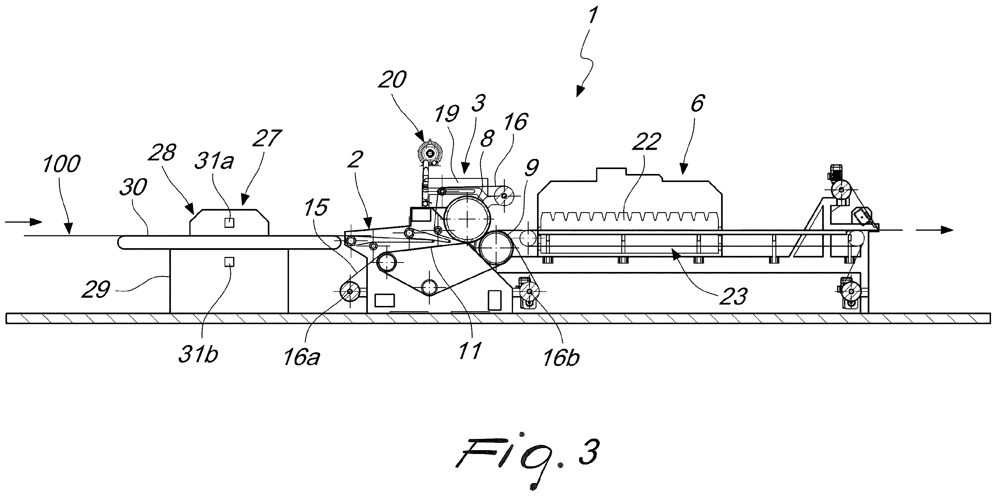

Figure 3 is a sectional lateral elevation view of the apparatus according to the invention;
Figure 4 is a schematic sectional lateral elevation view of a portion of the apparatus according to the invention;

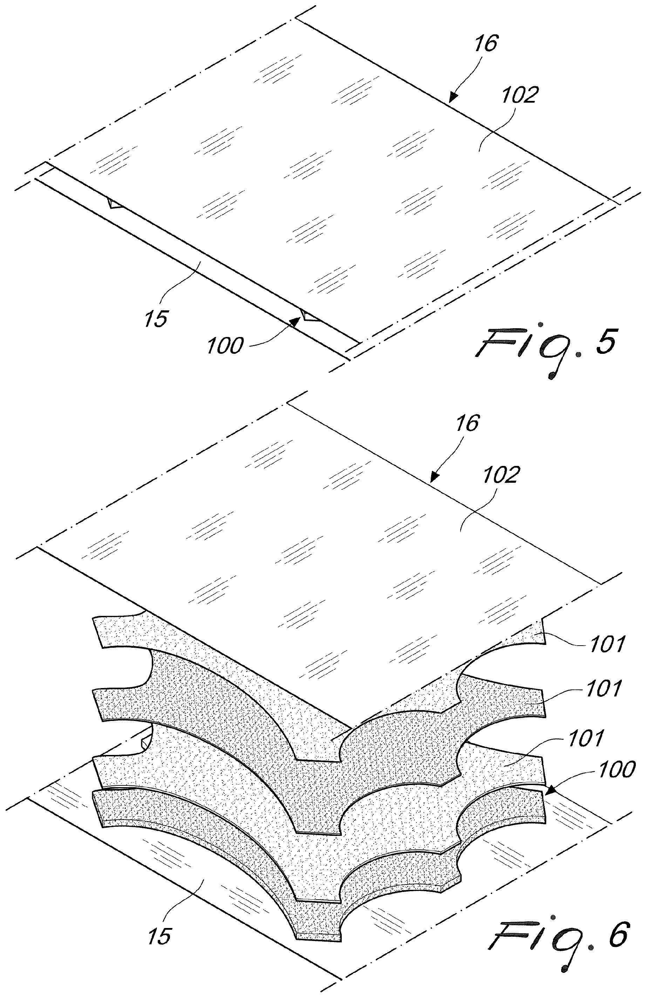

Figure 5 is a schematic perspective view of a hide being processed in the apparatus according to the invention;
Figure 6 is an exploded perspective view of the hide of Figure 5;

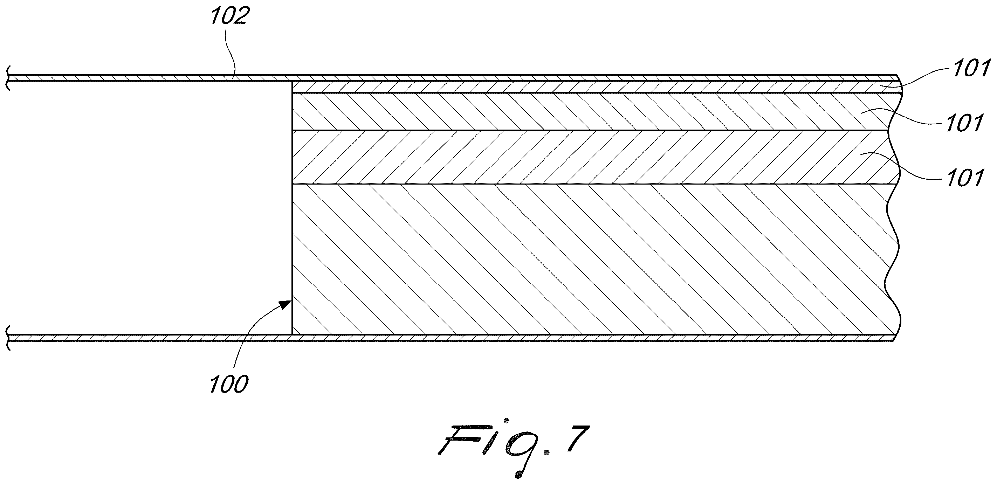

Figure 7 is a sectional view, taken along a thickness thereof, of the hide being processed in Figure 5.

With reference to the figures, the method for normalizing the finishing of natural hides according to the invention is applied to a hide 100 that is at least partially finished, in which at least one finishing layer 101 made of polymeric material has already been applied to at least one of its faces.

In particular, the method provides for heating the finishing layer 101 of the hide 100 in order to bring it to a temperature substantially comprised between the glass transition temperature and the melting point of the polymeric material of which it is made.

Subsequently, the finishing layer 101 is subjected to an action for reorganization of its polymeric chains, in order to orient its polymeric chains predominantly along at least one preferred direction.

Finally, the finishing layer 101 is cooled to lock its polymeric chains in the preferred orientation direction.

It should be noted that multiple finishing layers 101 may be applied to the hide 100, superimposed on each other, and in this case the heating and the action for reorganization of the polymeric chains may affect at least the outermost finishing layer 101.

Advantageously, at least during the action for reorganization of the polymeric chains, the finishing layer or layers 101 are subjected to a compression action, which preferably takes place gradually.

Conveniently, in order to carry out the action for reorganization of the polymeric chains, an applicator film 102 made of plastic material, which has molecules oriented in at least one direction, is coupled to the face of the finishing layer 101, or at least of the outermost finishing layer, that is opposite with respect to the hide 100.

In particular, the direction in which the molecules of the applicator film 102 are oriented is substantially parallel to the preferred direction in which the polymeric chains of the finishing layer 101 of the hide 100 are reorganized.

Advantageously, the applicator film 102 comprises a film made of biaxially oriented polyester or bioriented polyethylene.

More particularly, the applicator film 102 is, for example, constituted by a film provided by stretching polyester or polyethylene to create a versatile engineered film that includes, among its numerous advantages, chemical and dimensional stability, transparency, reflectivity, gas and aroma barrier properties, and electrical insulation properties.

To implement the method described above, an apparatus according to the invention, generally designated by the reference numeral 1, can be used, which comprises at least one conveyor 2 for moving, along an advancement path, at least partially finished hides 100, which have, on at least one of their faces, at least one finishing layer 101 made of polymeric material.

Along the advancement path formed by the conveyor 2 there is at least one processing station 3 for the hides 100, which is provided with heating means 4 that allow the finishing layer 101 of the hides being processed to be heated in order to bring it to a temperature substantially comprised between the glass transition temperature and the melting point of the polymeric material with which the finishing layer 101 is provided.

The processing station 3 furthermore comprises means 5 for reorganizing the molecules of the finishing layer 101, which are configured to orient the polymeric chains of the finishing layer 101 predominantly along at least one preferred orientation direction.

Downstream of the processing station 3, along the advancement path of the hides 100, there is at least one conditioning station 6 which has the function of cooling the finishing layer 101, so as to bring its temperature back below the glass transition temperature of the polymeric material with which the finishing layer is provided, so as to lock the polymer chains of the finishing layer 101 in the preferred orientation direction in which they were predominantly oriented in the processing station 3.

Moreover, the processing station 3 comprises compression means 7 that allow gradual compression of the hides being processed, along at least one portion of their advancement path, within the processing station itself.

Conveniently, said compression means 7 comprise at least one heated operating roller 8, which advantageously also provides, or contributes to providing, the heating means 4, and at least one counterpressure roller 9.

The operating roller 8 and the counterpressure roller are arranged mutually opposite, with their respective lateral surfaces facing each other, so as to delimit, in the space comprised between them, at least one first constriction region 10, which is intended to be crossed by the hides being processed that transit along the advancement path and is configured to exert a predetermined pressure on the hides being processed.

Conveniently, the operating roller 8 is positioned in an upward region with respect to the counterpressure roller 9 and the hides being processed are conveyed by the conveyor 2 so that the face on which the finishing layer 101 is applied is directed toward the operating roller 8.

Preferably, the counterpressure roller 10 is movable towards or away from the operating roller 9 by means of hydraulic actuators, not shown.

The pressure applied by the operating roller 8 and the counterpressure roller 9 on the hides being processed in the first constriction region 10 can be adjusted conveniently by varying the distance between the operating roller 8 and the counterpressure roller 9.

Alternatively, the pressure exerted by the operating roller 8 and the counterpressure roller 9 on the hides being processed in the first constriction region 10 can also be adjusted by varying the hydraulic pressure of the actuators that move the counterpressure roller 9 relative to the operating roller 8.

Advantageously, the conveyor 2 comprises at least one felt belt 11, which runs continuously between at least two guiding assemblies 12a and 12b and forms a supporting surface 11a designed to receive, by resting contact, the hides being processed with their face opposite the one provided with the finishing layer 101.

Conveniently, the felt belt 11 passes through the first constriction region 10, so as to guide the hides being processed as they pass through the first constriction region 10.

More preferably, the felt belt 11 has a closed loop configuration and runs continuously between the counterpressure roller 9 and at least one guiding roller 13.

Advantageously, the felt belt 11 winds around at least one portion 8a of the operating roller 8 that is located upstream of the first constriction region 10, with respect to the advancement direction of the hides being processed, so as to form, between the portion 8a of the operating roller 8 and the felt belt 11, at least one second constriction region 14, which can be crossed by the hides being processed and is configured to exert a lower pressure on the hides being processed than the pressure applied at the first constriction region 10 by the operating roller 8 and the counterpressure roller 9.

It should be noted that the pressure to which the hide being processed is subjected by the second constriction region 14 corresponds to the pressure exerted by the tension of the felt belt 11 resting against the operating roller 8.

A protective ribbon 15 is conveniently interposed between the hides being processed and the felt belt 11, and unwinds, resting on the supporting surface 11a of the felt belt 11, between an unwinding roller 16a and a winding roller 16b.

Such protective ribbon 15 is preferably constituted by a ribbon of protective paper.

The means 5 for reorganizing the molecules of the finishing layer 101 advantageously comprise at least one plastic applicator film ribbon 16, provided with polymeric chains that have a predominant orientation along at least one preset direction or, more preferably, along at least two preset directions that are substantially perpendicular to each other.

For example, the applicator film ribbon 16 is constituted by a ribbon made of biaxially oriented polyester or bioriented polyethylene. In practice, the applicator film ribbon 16 is a ribbon of the same applicator film 102 mentioned above.

In particular, the applicator film ribbon 16 is continuously unwound between an unwinding roller 17 and a winding roller 18, so that at least one portion of it is in contact with or at least faces the finishing layer 101 of the hides being processed that pass on the conveyor 2, at least at the first constriction region 10 and at the second constriction region 14.

In particular, the unwinding roller 17 is mounted above the operating roller 8 and the applicator film ribbon 16, in its path towards the winding roller 18, winds around the portion 8a of the operating roller 8, so that it can adhere to the finishing layer 101 of the hides being processed at least in one portion of the path of the hides being processed that is comprised between the first and second constriction regions 10 and 14.

Conveniently, the applicator film ribbon 16, with at least one part of its path through the processing station 3 and, more preferably, with at least its portion comprised between the unwinding roller 17 and the first constriction region 10, is arranged inside a pressurized chamber 19, which makes it possible to keep clean the applicator film ribbon 16, to prevent dust or other pollutants from compromising the quality of the treatment.

Advantageously, a blower 20 or other equivalent device, conveniently equipped with an air filter, is connected to the pressurized chamber 19, allowing the pressurized chamber 19 to be pressurized.

An ionizing bar 21 is conveniently arranged inside the pressurized chamber 19 and is configured for the ionization of the applicator film ribbon 16 and is preferably arranged facing a substantially straight portion of the applicator film ribbon interposed between the unwinding roller and the operating roller 8, to protect the applicator film ribbon 16 from the deposition of dust or other matter.

Advantageously, the winding roller 18 is located downstream of the conditioning station 6, so that the applicator film ribbon 16 remains adhered to the finishing layer 101 throughout the portion of the advancement path of the hides being processed in the conditioning station 6.

The conditioning station 6 in turn comprises a cooling chamber 22 that can be crossed by the hides being processed along their advancement path.

The cooling chamber 22 advantageously has means for cooling the hides being processed with controlled temperature and ventilation.

The hides to be processed are conveniently conveyed through the cooling chamber 22 by a moving device 23, advantageously located immediately downstream of the first constriction region 10, which allows the hides being processed to advance along a substantially straight and substantially horizontal trajectory.

More particularly, the moving device 23, for example provided by a conveyor mat, comprises a translation plane 23a for the hides being processed, which substantially coincides with a plane tangent to the counterpressure roller 9 and is movable with uniform and perfectly rectilinear motion, in order to avoid deformations, creases, and undulations during the step for cooling the hides being processed.

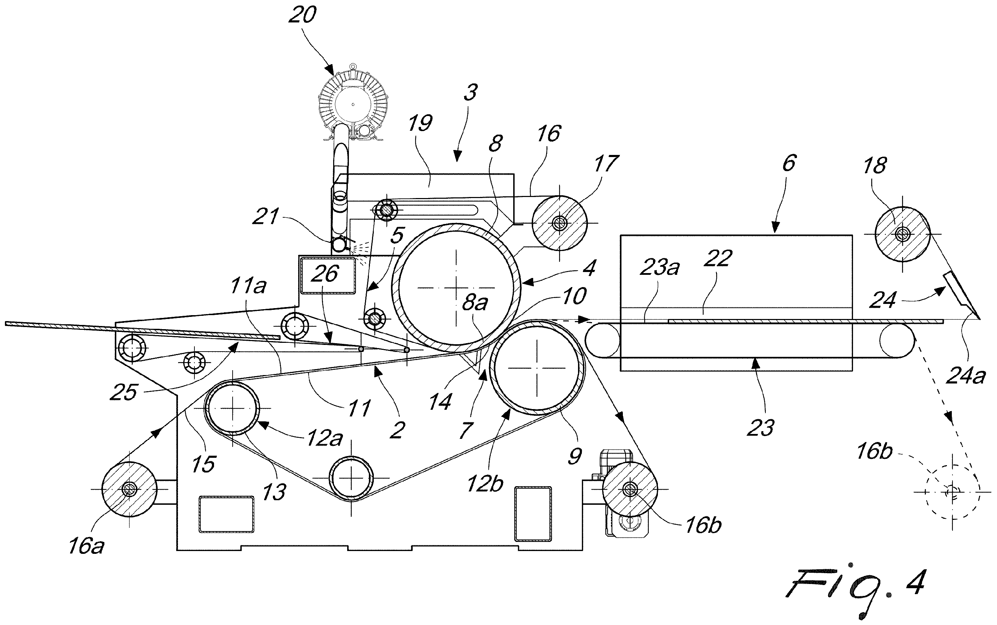

It should be noted that the protective ribbon 15 optionally can continue its path even beyond the felt belt 11 and the counterpressure roller 9, so that it can be arranged even above the translation plane 23a of the moving device and, in this case, the winding roller 16b is positioned downstream of said moving device, as shown with a dashed line in Figure 4.

Advantageously, downstream of the conditioning station 6 along the advancement direction of the hides being processed, there is a peeling device 24 which is configured to detach the applicator film ribbon 16 from the hides being processed and, more particularly, from their finishing layer 101.

The peeling device 24 can be provided by a separation blade 24a, which acts so as to provide the detachment of the applicator film ribbon 16 as the hide being processed advances on the moving device 23; said ribbon is then collected around the winding roller 18.

Advantageously, for feeding the hides being processed to the felt belt 11, upstream of the second constriction region 14 there are mutually superimposed insertion belts 25 and 26, which allow the hides being processed to be conveyed toward the second constriction region 14, bringing them into resting contact on the supporting surface 11a of the felt belt 11.

Conveniently, upstream of the processing station 3 according to the advancement direction of the hides being processed, a dust removal station 27 may furthermore be provided which allows the hides 100 to be cleaned of dust or dirt before they arrive at the processing station 3.

For example, the dust removal station 27 can be provided by a dust removal machine 28, which comprises a frame 29, which supports at least one motorized belt 30 for conveying the hide 100, at least one first cleaning head 31a for cleaning the upper surface of the hide 100, equipped with a blower with air suction, and at least one second cleaning head 31b for cleaning the lower face of the hide, equipped with an air blower.

Automatic movement means for easy head cleaning are also provided in the dust removal machine 28.

The operation of the apparatus according to the invention is as follows.

The hides 100, deposited on the motorized conveyor belt 30, pass through the dust removal machine 28 before reaching the processing station 3, where the insertion belts 25, 26 deposit them on the supporting surface 11a of the felt belt 11 and, more precisely, on the protective ribbon 15, with their face opposite the one on which the finishing layer 101 is applied.

The felt belt 11 then conveys the hides 100 toward the second constriction point 14, where, under the pressure exerted by the felt belt 11 and the heating applied by the operating roller 8, the applicator film ribbon 16 is temporarily coupled to the finishing layer 101 of the hides 100 and the temperature of the finishing layer 101 progressively increases between the glass transition temperature and the melting point of the polymeric material with which it is made.

The felt belt 11 conveys the hides 100 along the second constriction region 14 up to the exit at the first constriction point 10, where the hides 100 can undergo further and greater compression between the operating roller 8 and the counterpressure roller 9.

It should be noted that the heating and compression undergone by the hide 100 and in particular by the finishing layer 101, as it passes through the second constriction region 14 and the first constriction region 10, occur in a substantially gradual manner, while the finishing layer is brought into contact with the applicator film ribbon 16.

During the passage of the hide 100 through the second constriction region 14 and the first constriction region 10, under the temperature and pressure conditions to which the hide is subjected, moreover, the molecules of the applicator film ribbon 8 also exchange intermolecular forces of the Van der Waals type with the molecules of the finishing layer 101, and said forces act so as to reorganize the polymeric chains of the finishing layer 101.

Essentially, the applicator film ribbon 16, which is interposed between the finishing layer 101 and the operating roller 8, under the action of compression and with the application of heat, guides the molecular orientation of the polymeric chains within the finishing layer 101 in preferential directions.

After exiting the first constriction region 10, the hides 100, with the applicator film ribbon 16 still applied to their finishing layer 101, continue their advancement by means of the moving device 23, which conveys them through the conditioning station 6, where the hides 100 undergo progressive and rapid cooling, essentially a controlled thermal shock, in order to lock the polymeric chains of the finishing layer 101 reoriented according to the preferred directions.

It should be noted that in this step the applicator film ribbon 16, still adhered to the upper face of the finishing layer 101, placed on the hide 100, acts as a protection.

Upon exiting the cooling chamber 22, the hides 100 continue to advance up to the peeling device 24, which detaches the applicator film ribbon 16 from the finishing layer 101 of the hides 100, and the ribbon 16 is collected around the winding roller 18, while the now treated hides 100 can be stacked on a pallet or rack, for example.

In practice it has been found that the invention achieves its intended aim and objects, and in particular the fact is stressed that the method and apparatus according to the invention make it possible to give the finished hides a qualitatively superior appearance and mechanical characteristics.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102025000008808 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for normalizing the finishing of natural hides, **characterized in that** it comprises the steps of:
- providing at least one at least partially finished hide (100) with at least one finishing layer (101) made of polymeric material applied to at least one face thereof;
- subjecting said at least one finishing layer (101) to heating to bring it to a temperature substantially comprised between the glass transition temperature and the melting point of said polymeric material;
- subjecting said at least one finishing layer (101) to an action of reorganization of its polymeric chains in order to orient its polymeric chains predominantly along at least one preferred direction;
- subjecting said at least one finishing layer (101) to cooling in order to lock the polymeric chains of said finishing layer (101) in said preferred orientation direction.

2. The method according to claim 1, **characterized in that** said at least one finishing layer (101) is subjected to a compression action, at least during said reorganization action.

3. The method according to claim 2, **characterized in that** said compression action takes place gradually.

4. The method according to claim 1, **characterized in that** said reorganization action provides for mating to said finishing layer (101), on its face that is opposite said hide (100), an applicator film (102) made of a plastic material having polymeric chains predominantly oriented in at least one direction.

5. The method according to claim 1, **characterized in that** said applicator film (102) comprises a film of biaxially oriented polyester or bioriented polyethylene.

6. An apparatus for normalizing the finishing of natural hides, **characterized in that** it comprises:
- at least one conveyor (2) for the movement, along an advancement path, of at least partially finished hides (100) having, on at least one face thereof, at least one finishing layer (101) made of polymeric material;
- at least one processing station (3) for said hides, which is arranged along said advancement path and is provided with means (4) for heating said at least one finishing layer to a temperature comprised between the glass transition temperature and the melting point of said polymeric material and means (5) for reorganizing the polymeric chains of said at least one finishing layer (101) which are configured to orient the polymeric chains of said finishing layer (101) predominantly along at least one preferred orientation direction;
- at least one conditioning station (6) for said at least one finishing layer (101), located downstream of said processing station (3), along said advancement path, for locking the polymeric chains of said finishing layer (101) in the preferred orientation direction.

7. The apparatus according to claim 6, **characterized in that** said processing station comprises means (7) for gradually compressing the hides being processed along at least one portion of said advancement path.

8. The apparatus according to claim 7, **characterized in that** said compression means (7) comprise at least one heated operating roller (8) and at least one counterpressure roller (9), which are mutually opposite and delimit in the space comprised between them at least one first constriction region (10) intended to be crossed by the hides being processed, in transit along said advancement path, and configured to apply a predetermined pressure to the hides being processed.

9. The apparatus according to claim 8, **characterized in that** said at least one conveyor (2) comprises at least one felt belt (11) which runs continuously between at least two guiding assemblies (12a, 12b) and forms a supporting surface designed to receive, by resting thereon, the hides being processed with their face that is opposite the one provided with said at least one finishing layer (101), said felt belt (11) wrapping around at least one portion (8a) of said operating roller (8), located upstream of said first constriction point (10), with respect to the direction of advancement of the hides on said conveyor (2), to form at least one second constriction region (14) that can be crossed by the hides being processed and is configured to apply to the hides being processed a pressure that is lower than the pressure applied at said first constriction region (10).

10. The apparatus according to one or more of claims 6 to 9, **characterized in that** said polymeric chain reorganization means (5) comprise at least one plastic applicator film ribbon (16) having polymeric chains provided with a predominant orientation along at least one preset direction, said applicator film ribbon (16) being continuously unwound in a position facing said finishing layer (101) of the hides being processed that pass on said at least one conveyor (2), at least at said first and said second constriction regions (10, 14).

11. The apparatus according to one or more of claims 6 to 10, **characterized in that** said conditioning station (6) comprises a cooling chamber (22) that can be crossed by the hides being processed along said advancement path, said at least one conveyor (2) comprising a device (23) for moving the hides being processed along a substantially rectilinear and horizontal trajectory through said cooling chamber (22).

12. The apparatus according to one or more of claims 6 to 11, **characterized in that** it comprises, downstream of said conditioning station (6) in the direction of advancement of the hides being processed, a peeling device (24) configured to detach said applicator film ribbon (16) from the hides being processed.

13. The apparatus according to one or more of claims 6 to 12, **characterized in that** said applicator film ribbon (16), for at least one part of its path through said processing station (3), is arranged inside a pressurized chamber (19).

14. The apparatus according to one or more of claims 6 to 13, **characterized in that** an ionizing bar (21) configured for ionizing said applicator film ribbon (16) is arranged in said pressurized chamber (19).
